(19) Europäisches Patentamt
European Patent Office
Office européen des brevets

(11) Veröffentlichungsnummer : **0 421 197 B1**

(12) **EUROPÄISCHE PATENTSCHRIFT**

(45) Veröffentlichungstag der Patentschrift :
**12.01.94 Patentblatt 94/02**

(51) Int. Cl.$^5$ : **C08F 4/651,** C08F 4/654, C08F 10/00

(21) Anmeldenummer : **90118083.6**

(22) Anmeldetag : **20.09.90**

# (54) Katalysatorsysteme vom Typ der Ziegler-Natta-Katalysatoren.

(30) Priorität : **29.09.89 DE 3932553**

(43) Veröffentlichungstag der Anmeldung :
**10.04.91 Patentblatt 91/15**

(45) Bekanntmachung des Hinweises auf die Patenterteilung :
**12.01.94 Patentblatt 94/02**

(84) Benannte Vertragsstaaten :
**AT BE DE ES FR GB IT NL**

(56) Entgegenhaltungen :
**EP-A- 0 086 473**
**EP-A- 0 171 200**
**FR-A- 2 516 520**

(73) Patentinhaber : **BASF Aktiengesellschaft**
**Carl-Bosch-Strasse 38**
**D-67063 Ludwigshafen (DE)**

(72) Erfinder : **Koelle, Peter, Dr.**
**An der Froschlache 19**
**D-6700 Ludwigshafen (DE)**
Erfinder : **Kerth, Juergen, Dr.**
**Wattenheimer Strasse 15**
**D-6719 Carlsberg (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft neue Katalysatorsysteme vom Typ der Ziegler-Natta-Katalysatoren, enthaltend als aktive Bestandteile

a) eine titanhaltige Feststoffkomponente, die Titan, Magnesium, Halogen und einen Norbornadiendicarbonsäureester der allgemeinen Formel I

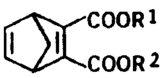

I

als Elektronendonor enthält, in er $R^1$ und $R^2$ $C_1$-$C_8$-Alkylgruppen bedeuten,

b) eine Aluminiumkomponente und

c) eine weitere Elektronendonorkomponente.

Außerdem betrifft die Erfindung die Herstellung solcher Katalysatorsysteme, die Herstellung von Polymerisaten des Propylens mit Hilfe dieser Katalysatorsysteme, die hiernach erhältlichen Polymerisate sowie Folien und Formkörper aus diesen Polymerisaten.

Katalysatorsysteme vom Typ der Ziegler-Natta-Katalysatoren sind u.a. aus der EP-B 14523, der EP-A 23425, der EP-A 45975 und der EP-A 195 497 bekannt. Diese Systeme werden insbesondere zur Polymerisation von $\alpha$-Olefinen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titanverbindung und andererseits als selbständige Katalysatorkomponente verwendet werden.

Um eine wirtschaftliche Polyolefinproduktion zu gewährleisten, müssen solche Katalysatorsysteme u.a. eine hohe Produktivität aufweisen. Darunter versteht man das Verhältnis der gebildeten Menge Polymerisat zur Menge des eingesetzten Katalysators. Weiterhin ist es erforderlich, daß die dabei erhältlichen Polymerisate möglichst stereospezifisch ausgerichtet sind, d.h. der Anteil nichtisotaktischer Molekülstrukturen sollte 2 bis 2,5 % nicht übersteigen.

Diese beiden Zielvorgaben lassen sich nach dem Stand der Technik zusammen nur bedingt verwirklichen. So ist beispielsweise aus der EP-A 86473 ein Katalysatorsystem bekannt, bei dem als Elektronendonorverbindungen Carbonsäureester und Siliciumverbindungen verwendet werden, das zwar eine befriedigend hohe Produktivität aufweist, im Hinblick auf die Stereospezifität der entstehenden Polymerisate aber zu wünschen übrig läßt. In der EP-A 171 200 wird ein Ziegler-Natta-Katalysatorsystem beschrieben, das u.a. Carbonsäureester und Siliciumverbindungen als Elektronendonorverbindungen enthält. Dieses Katalysatorsystem ermöglicht die Herstellung von Polypropylenen mit hoher Stereospezifität, weist aber neben einer nicht mehr befriedigenden Produktivität den weiteren Nachteil auf, daß die Kornverteilung des hierbei erhältlichen Polymerisats zu breit ist.

Neben diesen, insbesondere für die Verarbeitung der Polymerisate wichtigen Eigenschaften ist auch ein niedriger Halogengehalt im Polyolefin von Bedeutung, um die Verwendung derartiger Materialien in Kombination mit korrosionsgefährdeten Stoffen zu ermöglichen.

Polymerisationsverfahren zur Herstellung von Polyolefinen werden entweder in Lösung, in einer Aufschlämmung oder in der Gasphase durchgeführt. Gegenüber den anderen Polymerisationsverfahren unterscheidet sich die Gasphasenpolymerisation durch eine besonders einfache Verfahrensführung. Dabei muß jedoch eine Verringerung der Katalysatorproduktivität sowie eine Verschlechterung der Stereospezifität und der morphologischen Eigenschaften der entstehenden Polymerisate in Kauf genommen werden. So wird beispielsweise in der GB-A-2 111 066 ein Katalysatorsystem zur Polymerisation von Polyolefinen beschrieben, das ebenfalls u.a. Carbonsäureester und Siliciumverbindungen als Elektronendonorverbindungen enthält. Dieses Katalysatorsystem zeichnet sich durch eine hohe Produktivität und durch gute Produkteigenschaften der dabei gebildeten Polymerisate, insbesondere hinsichtlich der Stereospezifität, der Kornverteilung und des Feinstkorn- anteils aus. Wie der entsprechende Vergleichsversuch der vorliegenden Anmeldung zeigt, verschlechtern sich diese Eigenschaften jedoch erheblich, wenn die Polymerisation statt in der Lösungsphase nunmehr in der Gasphase durchgeführt wird.

Der vorliegenden Erfindung lag daher die Schaffung eines neuen Katalysatorsystems als Aufgabe zugrunde, mit dem den geschilderten Nachteilen abgeholfen werden kann und mit welchem es insbesondere möglich ist, auch in der Gasphase Polyolefine mit hoher Produktivität herzustellen, die sich durch eine hohe Stereospezifität und durch gute morphologische Eigenschaften, insbesondere durch einen möglichst geringen Feinstkornanteil, auszeichnen.

Demgemäß wurden die eingangs definierten neuen Katalysatorsysteme gefunden.

Zur Herstellung der titanhaltigen Feststoffkomponente werden im allgemeinen Halogenide oder Alkoholate des drei- oder vierwertigen Titans verwendet, wobei die Chloride des Titans, insbesondere Titantetrachlorid, bevorzugt sind. üblicherweise wird die titanhaltige Feststoffkomponente auf einem möglichst feinteiligen Träger aufgebracht, wobei sich Silicium- und Aluminiumoxide, sowie Aluminiumsilicate gut bewährt haben. Ein besonders bevorzugter Träger ist dabei insbesondere $SiO_2{\cdot}aAl_2O_3$, wobei a für einen Wert im Bereich von 0 und 2, insbesondere im Bereich von 0 und 0,5 steht.

Weitere Bestandteile der titanhaltigen Feststoffkomponente sind u.a. Verbindungen des Magnesiums. Als solche kommen Magnesiumhalogenide, Magnesiumalkyle und Magnesiumalkoxyverbindungen in Betracht, wobei insbesondere Magnesiumdichlorid, Magnesiumdibromid und Magnesium-($C_1$-$C_{10}$-Alkyl)-Verbindungen verwendet werden. Daneben erhält diese Komponente noch ein Halogen, bevorzugt Chlor oder Brom.

Erfindungsgemäß enthält die Titankomponente noch einen Norbornadiendicarbonsäureester der Formel I, wobei $R^1$ und $R^2$ vorzugsweise eine $C_1$-$C_4$-Alkylgruppe bedeutet. Unter diesen Verbindungen sind insbesondere der Dimethyl-, Diethyl-, Dipropyl-, Diisopropyl- und der Dibutylester hervorzuheben.

Die titanhaltige Feststoffkomponente wird bevorzugt nach folgendem zweistufigen Verfahren hergestellt.

In der ersten Stufe versetzt man zunächst einen feinteiligen Träger, bevorzugt $SiO_2{\cdot}aAl_2O_3$ - wobei a für eine Zahl im Bereich von 0 und 2, insbesondere im Bereich von 0 und 0,5 steht - der im allgemeinen einen Teilchendurchmesser von 0,1 bis 1000 μm, insbesondere von 10 bis 300 μm, ein Porenvolumen von 0,1 bis 10 $cm^3$/g, insbesondere von 1,0 bis 4,0 $cm^3$/g und eine spezifische Oberfläche von 10 bis 1000, insbesondere von 100 bis 500 $m^2$ aufweist, mit einer Lösung der magnesiumhaltigen Verbindung in einem flüssigen Alkan, wonach man dieses Gemisch 0,5 bis 2 Stunden lang bei einer Temperatur zwischen 10 und 120°C rührt. Vorzugsweise setzt man pro Mol des Trägers 0,1 bis 1 mol der Magnesiumverbindung ein. Anschließend bringt man unter ständigem Rühren ein Halogen oder einen Halogenwasserstoff, insbesondere Chlor oder Chlorwasserstoff, im wenigstens zweifachen, bevorzugt im wenigstens fünffachen molaren überschuß, bezogen auf die magnesiumhaltige Verbindung, ein. Nach etwa 30 bis 120 Minuten fügt man dieser Lösung bei einer Temperatur zwischen 10 und 150°C ein $C_1$-$C_8$-Alkanol, insbesondere Ethanol, ein Halogenid oder ein Alkoholat des drei- oder vierwertigen Titans, insbesondere Titantetrachlorid, sowie den erfindungsgemäß einzusetzenden Norbornadiendicarbonsäureester der Formel I hinzu. Dabei setzt man pro Mol Magnesium aus der magnesiumhaltigen Verbindung 1 bis 5 Mol, bevorzugt 2 bis 4 Mol, Alkanol, 2 bis 20 Mol des drei- oder vierwertigen Titans und 0,01 bis 1 Mol, vorzugsweise 0,1 bis 1 Mol, des Norbornadiendicarbonsäureesters ein. Die Lösung wird wenigstens eine Stunde lang bei einer Temperatur zwischen 10 und 150°C gerührt und der so erhaltene feste Stoff anschließend abfiltriert.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Die auf diese Weise erhältliche Titankomponente wird anschließend mit der Aluminiumkomponente und einer weiteren Elektronendonorkomponente vereinigt.

Als Aluminiumkomponente kommen neben Trialkylaluminium auch solche Verbindungen in Betracht, bei denen ein Alkylsubstituent durch eine Alkoxygruppe oder durch ein Halogenatom, beispielsweise durch ein Chlor- oder ein Bromatom ersetzt ist. Bevorzugt werden Trialkylaluminiumverbindungen verwendet, deren Alkylsubstituerten jeweils 1 bis 8 C-Atome aufweisen, beispielsweise Trimethyl- und Triethylaluminium.

Neben der titanhaltigen Feststoffkomponente und der Aluminiumkomponente enthalten die erfindungsgemäßen Katalysatorsysteme noch weitere Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind siliciumorganische Verbindungen der Formel II

$$R^3_nSi(OR^4)_{4-n}, \qquad II$$

wobei $R^3$ für einen der Reste $R^1$ oder einen $C_6$-$C_{10}$-Aryl- oder Arylalkylrest steht, $R^4$ eine $C_1$-$C_{10}$-Alkylgruppe bedeutet und n einem Wert von 0 bis 3 entspricht. Besonders bevorzugt werden dabei solche Verbindungen, in denen $R^3$ einer $C_1$-$C_8$-Alkylgruppe oder einer 5- bis 7-gliedrigen Cycloalkylgruppe sowie $R^4$ einer $C_1$-$C_4$-Alkylgruppe entspricht und n für die Zahlen 1 oder 2 steht.

Unter diesen Verbindungen sind Triethoxytoluylsilan, Dimethoxyditoluylsilan, Dimethoxydicyclopentylsilan, Dimethoxydiisopropylsilan und Dimethoxyisobutylisopropylsilan hervorzuheben.

Bevorzugt werden solche Katalysatorsysteme verwendet, bei denen das Atomverhältnis zwischen Aluminium aus der Aluminiumkomponente und Titan aus der titanhaltigen Feststoffkomponente 10:1 bis 800:1, insbesondere 20:1 bis 200:1, und das Molverhältnis zwischen der Aluminiumkomponente und der Elektronendonorkomponente (c) 1:1 bis 100:1, insbesondere 2:1 bis 80:1 beträgt.

Das erfindungsgemäße Katalysatorsystem kann zur Herstellung von Polymerisaten des Propylens verwendet werden.

Dies kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktionsdauer hängt entscheidend von den jeweils gewählten Polymerisationsbedingungen ab. Sie liegt üblicherweise zwischen 0,2 und 20 Stunden, meistens zwischen 0,5 und 10 Stunden.

Unter Polymerisaten des Propylens werden neben Homopolymerisaten des Propylens auch Copolymerisate des Propylens mit untergeordneten Mengen anderer $\alpha,\beta$-ungesättigter olefinischer Verbindungen mit 2 bis 8 C-Atomen verstanden, z.B. von $\alpha$-Monoolefinen oder von bifunktionellen $\alpha$,-Olefinen, beispielsweise Hexadi-1,5-en. Besonders geeignete Comonomere sind u.a. Ethylen, But-l-en, Pent-1-en, Hex-1-en, Hept-1-en und Oct-1-en.

Die dabei erhaltenen Copolymerisate können sowohl blockartig, als auch statistisch oder alternierend aufgebaut sein. Das erfindungsgemäße Katalysatorsystem eignet sich insbesondere auch zur Herstellung von Propylen-Ethylen-Copolymerisaten mit bis zu 10 Gew.-% von einpolymerisiertem Ethylen und von Terpolymerisaten des Propylens mit untergeordneten Mengen von einpolymerisiertem Ethylen und But-1-en.

Die Polymerisationsreaktion wird zweckmäßigerweise bei Temperaturen von 20 bis 150°C, bevorzugt bei 30 bis 120°C und Drücken von 1 bis 100 bar, vorzugsweise bei 10 bis 50 bar, durchgeführt. Die Molmasse der dabei gebildeten Polyolefine kann durch Zugabe von in der Polymerisationstechnik gebräuchlichen Reglern, beispielsweise von Wasserstoff, kontrolliert und auf eine enge Verteilung eingestellt werden. Weiterhin ist es möglich, inerte Lösungsmittel wie beispielsweise Toluol oder Hexan, Inertgase wie Stickstoff oder Argon und kleinere Mengen Polypropylenpulver mitzuverwenden.

Die erfindungsgemäß erhältlichen Propylenhomo- und -copolymerisate sind in den für Polyolefine üblichen Molmassen erhältlich, wobei Polymerisate mit Molmassen zwischen 20 000 und 800 000 bevorzugt werden.

Das erfindungsgemäße Katalysatorsystem weist gegenüber den bisher bekannten Katalysatorsystemen eine höhere Produktivität und eine verbesserte Stereospezifität, insbesondere bei Gasphasenpolymerisationen auf. Die auf diese Weise zugänglichen Polymerisate zeichnen sich vor allem durch einen sehr geringen Feinstkornanteil (< 0,25 mm) und einen niedrigen Chlorgehalt aus.

Aufgrund ihrer guten mechanischen Eigenschaften eignen sich die mit dem erfindungsgemäßen Katalysatorsystem hergestellten Propylenpolymerisate vor allem für die Herstellung von Folien und Formkörpern.

Beispiele

Beispiel 1

a) Herstellung der titanhaltigen Feststoffkomponente (a)

In einer ersten Stufe wurde $SiO_2$, das einen Teilchendurchmesser von 20 bis 45 µm, ein Porenvolumen von 1,75 $cm^3/g$ und eine spezifische Oberfläche von 320 $m^2/g$ aufwies, in n-Heptan suspendiert und mit einer Lösung von n-Butyloctylmagnesium in n-Heptan versetzt, wobei pro Mol $SiO_2$ 0,3 mol der Magnesiumverbindung eingesetzt wurden. Die Lösung wurde 60 Minuten bei 90°C gerührt, danach auf 20°C abgekühlt, wonach die 10fache molare Menge, bezogen auf die magnesiumorganische Verbindung, an Chlorwasserstoff eingeleitet wurde. Nach 30 Minuten wurde die Lösung unter ständigem Rühren mit 3 Mol Ethanol pro Mol Magnesium versetzt. Diese Lösung wurde 0,5 Stunden lang bei 80°C gerührt und anschließend mit 7 mol Titantetrachlorid und 0,3 mol von in Heptan gelöstem Norbornadienyl-1,2-dimethylcarboxylat, jeweils gezogen auf 1 Mol Magnesium, versetzt. Die Lösung wurde 1,5 Stunden lang bei 125°C gerührt und danach wurde der Feststoff vom Lösungsmittel getrennt.

Das daraus erhaltene Produkt extrahierte man 3 Stunden lang bei 125°C mit einer 15 gew.-%igen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

b) Polymerisation

In einem mit einem Rührer versehenen 10 l-Stahlautoklaven wurden bei 30°C 50 g Polypropylenpulver, 10 mmol Triethylaluminium (in Form einer 1-molaren Lösung in n-Heptan), 1 mmol Dimethoxyisobutylisopropylsilan (in Form einer 1-molaren Lösung in n-Heptan), 10 l Wasserstoff und 100

mg der gemäß a) hergestellten titanhaltigen Feststoffkomponente vorgelegt. Anschließend wurde die Reaktortemperatur innerhalb von 10 Minuten auf 70°C erhöht, der Reaktordruck durch Aufpressen von gasförmigem Propylen auf 28 bar gebracht, wonach 2 Stunden lang polymerisiert wurde. Hierbei wurde das verbrauchte Monomere kontinuierlich durch neues ersetzt.

Dabei erhielt man 996 g eines Propylenhomopolymerisats mit einer mittleren Molmasse von 300.000. Die Produktivität des Katalysatorsystems, die als das Verhältnis der Menge an gebildetem Polymerisat zur Menge der titanhaltigen Feststoffkomponente definiert wird, der heptanlösliche Anteil, der eine Maßzahl für den Anteil an nichtisotaktischen Struktureinheiten darstellt, die Kornverteilung und der Chlorgehalt des Polymerisats sind in der nachstehenden Tabelle zusammengestellt.

Beispiel 2

Analog Beispiel 1a wurde eine titanhaltige Feststoffkomponente hergestellt, die anstelle des Norbornadienyl-1,2-dimethylcarboxylats die gleiche molare Menge Norbornadienyl-1,2-diethylcarboxylat enthielt.

Mit diesem Katalysator wurde Propylen analog Beispiel 1b polymerisiert. Dabei erhielt man 1085 g eines Propylenhomopolymerisats mit einer mittleren Molmasse von 300.000. Die Ergebnisse sind der nachstehenden Tabelle zu entnehmen.

Vergleichsbeispiel A

Dabei wurde der Versuch von Beispiel 1 wiederholt, wobei als Elektronendonor die gleiche Molmenge Maleinsäuredibutylester eingesetzt wurde. Die Ergebnisse sind der nachstehenden Tabelle zu entnehmen.

Vergleichsbeispiel B

Unter den Bedingungen des Beispiels 1 der vorliegenden Erfindung wurde Propylen polymerisiert, abweichend hierzu jedoch mit dem Katalysator gemäß Beispiel 1 der GB-A 2 111 066.

Dieser Katalysator wies in der titanhaltigen Feststoffkomponente neben Titantetrachlorid, Magnesiumchlorid und als Elektronendonorverbindung Diisobutylphthalat auf. Neben der titanhaltigen Feststoffkomponente wurde dort als Aluminiumkomponente Triethylaluminium und als weitere Elektronendonorkomponente Phenyltriethoxysilan verwendet.

In der nachstehenden Tabelle sind den Ergebnissen dieses Versuchs (Nr. B) mit der Katalysatorkomponente gemäß Beispiel 1 der GB-A-2 111 066 die der vorliegenden Erfindung (Nr. 1 und 2) und des anderen Vergleichsversuchs (Nr. A) gegenübergestellt.

Wie die Tabelle zeigt, erhält man mit den Katalysatorsystemen gemäß der vorliegenden Erfindung unter den Bedingungen der Gasphasenpolymerisation höhere Produktivitäten und Stereospezifitäten und insbesondere verringerte Chlorgehalte und Feinstkornanteile (<0,25 mm), verglichen mit denjenigen der Vergleichsversuche A und B.

Tabelle

| | Beispiel 1 | Beispiel 2 | Vergleichsbeispiel A | Vergleichsbeispiel B |
|---|---|---|---|---|
| Produktivität (g Polypropylen/ g titanhaltige Feststoffkomponente) | 9960 | 10 850 | 6 050 | 9 345 |
| heptanlösliche Anteile (Gew.-%) | 1,6 | 2,0 | 3,5 | 2,4 |
| Kornverteilung (mm) | | | | |
| <0,25 | 1,5 | 4,0 | 4,9 | 82,4 |
| 0,25- 0,5 | 12,9 | 15,8 | 19,6 | 6,6 |
| 0,5 - 1 | 82,6 | 75,2 | 67,7 | 3,4 |
| 1 - 2 | 2,8 | 4,5 | 7,3 | 6,0 |
| >2 | 0,2 | 0,5 | 0,5 | 1,6 |
| Chlorgehalt im Produkt (ppm) | 23 | 21 | 43 | 60 |

## Patentansprüche

### Patentansprüche für folgende Vertragsstaaten : AT, BE, DE, FR, GB, IT, NL

**1.** Katalysatorsysteme vom Typ der Ziegler-Natta-Katalysatoren, enthaltend als aktive Bestandteile
a) eine titanhaltige Feststoffkomponente, die Titan, Magnesium, Halogen und einen Norbornadiendicarbonsäureester der allgemeinen Formel I

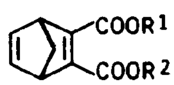

I

als Elektronendonor enthält, in der $R^1$ und $R^2$ $C_1$-$C_8$-Alkylgruppen bedeuten,
b) eine Aluminiumkomponente und
c) eine weitere Elektronendonorkomponente.

**2.** Katalysatorsysteme nach Anspruch 1, in deren Norbornadiendicarbonsäureester $R^1$ und $R^2$ $C_1$- bis $C_4$-Alkylgruppen bedeuten.

**3.** Katalysatorsysteme nach Anspruch 1 oder 2, in denen als Aluminiumkomponente eine Trialkylaluminiumverbindung verwendet wird, deren Alkylsubstituerten jeweils 1 bis 8 C-Atome aufweisen.

**4.** Katalysatorsysteme nach den Ansprüchen 1 bis 3, in denen als weitere Elektronendonorkomponente (c) eine Siliciumkomponente der allgemeinen Formel II

$$R^3_nSi(OR^4)_{4-n} \qquad II$$

verwendet wird, in der $R^3$ für einen der Reste $R^1$ oder einen $C_6$-$C_{10}$-Aryl- oder Arylalkylrest steht, $R^4$ eine $C_1$-$C_{10}$-Alkylgruppe bedeutet und n einem Wert von 0 bis 3 entspricht.

**5.** Katalysatorsysteme nach den Ansprüchen 1 bis 4, in denen als weitere Elektronendonorkomponente (c) eine Siliciumkomponente der allgemeinen Formel II verwendet wird, in der $R^4$ eine $C_1$-$C_4$-Alkylgruppe be-

deutet.

6. Katalysatorsysteme nach den Ansprüchen 1 bis 5, aufgebracht auf $SiO_2 \cdot aAl_2O_3$ als Trägermaterial, wobei a für einen Wert im Bereich von 0 bis 2 steht.

7. Verfahren zur Herstellung der Katalysatorsysteme gemäß den Ansprüchen 1 bis 6, dadurch gekennzeichnet, daß man

   a) in einer ersten Stufe ein feinteiliges Trägermaterial mit einer Lösung einer magnesiumhaltigen Verbindung in einem flüssigen Alkan bei einer Temperatur zwischen 10 und 120°C versetzt, anschließend ein Halogen oder einen Halogenwasserstoff im wenigstens zweifachen molaren überschuß einleitet und nach etwa 30 bis 120 Minuten diese Lösung bei einer Temperatur zwischen 10 und 150°C mit einem $C_1$-$C_8$-Alkanol, einem Halogenid oder einem Alkoholat des drei- oder vierwertigen Titans und dem Norbornadiendicarbonsäureester der Formel I versetzt, wobei man pro Mol Magnesium aus der magnesiumhaltigen Verbindung 1 bis 5 mol Alkanol, 2 bis 20 mol des drei- oder vierwertigen Titans und 0,01 bis 1 mol des Norbornadiendicarbonsäureesters verwendet und anschließend den so erhaltenen festen Stoff abfiltriert,

   c) dann in einer zweiten Stufe den in der ersten Stufe erhaltenen Feststoff einige Stunden lang bei Temperaturen zwischen 100 und 150°C mit überschüssigem Titantetrachlorid oder einer im überschuß vorliegenden Lösung von Titantetrachlorid in einem inerten Lösungsmittel extrahiert und anschließend solange mit einem flüssigen Alkan wäscht, bis der Gehalt der Waschflüssigkeit an Titantetrachlorid geringer als 2 Gew.-% ist,

   und die auf diese Weise erhältliche Titankomponente anschließend mit der Aluminiumkomponente und der weiteren Elektronendonorkomponente vereinigt.

8. Verfahren zur Herstellung von Polymerisaten des Propylens durch Polymerisation bei Temperaturen von 20 bis 150°C und Drücken von 1 bis 100 bar, dadurch gekennzeichnet, daß man hierzu ein Katalysatorsystem gemäß den Ansprüchen 1 bis 6 verwendet.

**Patentansprüche für folgenden Vertragsstaat : ES**

1. Verfahren zur Herstellung von Katalysatorsystemen vom Typ der Ziegler-Natta-Katalysatoren, enthaltend als aktive Bestandteile

   a) eine titanhaltige Feststoffkomponente mit Titan, Magnesium, Halogen und einer Elektronendonorkomponente,
   b) eine Aluminiumkomponente und
   c) eine weitere Elektronendonorkomponente,

   dadurch gekennzeichnet, daß man als Elektronendonorkomponente innerhalb der titanhaltigen Feststoffkomponente a) einen Norbornadiendicarbonsäureester der allgemeinen Formel I

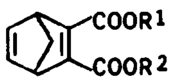

I

   verwendet, in der $R^1$ und $R^2$ $C_1$-$C_8$-Alkylgruppen bedeuten.

2. Verfahren nach Anspruch 1, dadurch gekennzeichnet, daß man als Elektronendonorkomponente innerhalb der titanhaltigen Feststoffkomponente (a) einen Norbornadiendicarbonsäureester der allgemeinen Formel I verwendet, bei dem $R^1$ und $R^2$ $C_1$- bis $C_4$-Alkylgruppen bedeuten.

3. Verfahren nach Anspruch 1 oder 2, dadurch gekennzeichnet, daß man als Aluminiumkomponente (b) eine Trialkylaluminiumverbindung verwendet, deren Alkylsubstituerten jeweils 1 bis 8 C-Atome aufweisen.

4. Verfahren nach den Ansprüche 1 bis 3, dadurch gekennzeichnet, daß man als weitere Elektronendonorkomponente (c) eine Siliciumkomponente der allgemeinen Formel II

$$R^3_nSi(OR^4)_{4-n} \qquad II$$

   verwendet, in der $R^3$ für einen der Reste $R^1$ oder einen $C_6$-$C_{10}$-Aryl- oder Arylalkylrest steht, $R^4$ eine $C_1$-$C_{10}$-Alkylgruppe bedeutet und n einem Wert von 0 bis 3 entspricht.

5. Verfahren nach den Ansprüchen 1 bis 4, dadurch gekennzeichnet, daß man als weitere

Elektronendonorkomponente (c) eine Siliciumkomponente der allgemeinen Formel II verwendet, in der $R^4$ eine $C_1$-$C_4$-Alkylgruppe bedeutet.

6. Verfahren nach den Ansprüchen 1 bis 5, dadurch gekennzeichnet, daß man die hiernach erhältlichen Katalysatorsysteme auf $SiO_2 \cdot aAl_2O_3$ als Trägermaterial aufbringt, wobei a für einen Wert im Bereich von 0 bis 2 steht.

7. Verfahren zur Herstellung der Katalysatorsysteme nach den Ansprüchen 1 bis 6, dadurch gekennzeichnet, daß man
   a) in einer ersten Stufe ein feinteiliges Trägermaterial mit einer Lösung einer magnesiumhaltigen Verbindung in einem flüssigen Alkan bei einer Temperatur zwischen 10 und 120°C versetzt, anschließend ein Halogen oder einen Halogenwasserstoff im wenigstens zweifachen molaren überschuß einleitet und nach etwa 30 bis 120 Minuten diese Lösung bei einer Temperatur zwischen 10 und 150°C mit einem $C_1$-$C_8$-Alkanol, einem Halogenid oder einem Alkoholat des drei- oder vierwertigen Titans und dem Norbornadiendicarbonsäureester der Formel I versetzt, wobei man pro Mol Magnesium aus der magnesiumhaltigen Verbindung 1 bis 5 mol Alkanol, 2 bis 20 mol des drei- oder vierwertigen Titans und 0,01 bis 1 mol des Norbornadiendicarbonsäureesters verwendet und anschließend den so erhaltenen festen Stoff abfiltriert,
   c) dann in einer zweiten Stufe den in der ersten Stufe erhaltenen Feststoff einige Stunden lang bei Temperaturen zwischen 100 und 150°C mit überschüssigem Titantetrachlorid oder einer im überschuß vorliegenden Lösung von Titantetrachlorid in einem inerten Lösungsmittel extrahiert und anschließend solange mit einem flüssigen Alkan wäscht, bis der Gehalt der Waschflüssigkeit an Titantetrachlorid geringer als 2 Gew.-% ist,

   und die auf diese Weise erhältliche Titankomponente anschließend mit der Aluminiumkomponente und der weiteren Elektronendonorkomponente vereinigt.

8. Verfahren zur Herstellung von Polymerisaten des Propylens durch Polymerisation bei Temperaturen von 20 bis 150°C und Drücken von 1 bis 100 bar, dadurch gekennzeichnet, daß man hierzu ein nach den Ansprüchen 1 bis 7 hergestelltes Katalysatorsystem verwendet.

## Claims

### Claims for the following Contracting States : AT, BE, DE, FR, GB, IT, NL

1. A Ziegler-Natta-type catalyst system containing as active constituents
   a) a titanium-containing solid component which contains titanium, magnesium, halogen and a norbornadienedicarboxylate of the formula I

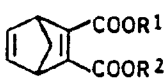

I

   as electron donor, where $R^1$ and $R^2$ are each $C_1$-$C_8$-alkyl,
   b) an aluminum component and
   c) another electron donor component.

2. A catalyst system as claimed in claim 1, where $R^1$ and $R^2$ in the norbornadienedicarboxylate are each $C_1$-$C_4$-alkyl.

3. A catalyst system as claimed in claim 1 or 2, whose aluminum component is a trialkylaluminum whose alkyl substituents each have from 1 to 8 carbon atoms.

4. A catalyst system as claimed in any of claims 1 to 3, whose other electron donor component (c) is a silicon compound of the formula II

$$R^3_nSi(OR^4)_{4-n} \qquad II$$

   where $R^3$ is one of the radicals $R^1$ or $C_6$-$C_{10}$-aryl or arylalkyl, $R^4$ is $C_1$-$C_{10}$-alkyl, and n is from 0 to 3.

5. A catalyst system as claimed in any of claims 1 to 4, whose other electron donor component (c) is a silicon

compound of the formula II where $R^4$ is $C_1$-$C_4$-alkyl.

6. A catalyst system as claimed in any of claims 1 to 5, applied to $SiO_2 \cdot aAl_2O_3$ as support, where a is from 0 to 2.

7. A process for preparing a catalyst system as claimed in any of claims 1 to 6, which comprises
   a) in a first stage mixing a finely divided support with a solution of a magnesium compound in a liquid alkane at from 10 to 120°C, then passing in a halogen or hydrogen halide in a not less than two-fold molar excess and, after about 30 to 120 minutes, mixing this solution at from 10 to 150°C with a $C_1$-$C_8$-alkanol, a halide or an alcoholate of trivalent or tetravalent titanium and the norbornadienedicarboxylate of the formula I, using from 1 to 5 mol of alkanol, from 2 to 20 gram atoms of trivalent or tetravalent titanium and from 0.01 to 1 mol of the norbornadienedicarboxylate per gram atom of magnesium in the magnesium compound, and subsequently filtering off the resulting solid,
   c) then in a second stage extracting the solid obtained in the first stage with excess titanium tetrachloride, which may be in solution in an inert solvent, at from 100 to 150°C for some hours, and subsequently washing with a liquid alkane until the titanium tetrachloride content in the washing liquid is below 2 % by weight,

   and subsequently combining the titanium component obtainable in this way with the aluminum component and the other electron donor component.

8. A process for preparing propylene polymers by polymerization at from 20 to 150°C under from 1 to 100 bar, wherein a catalyst system as claimed in any of claims 1 to 6 is used.

**Claims for the following Contracting State : ES**

1. A process for preparing a Ziegler-Natta-type catalyst system containing as active constituents
   a) a titanium-containing solid component which contains titanium, magnesium, halogen and an electron donor component,
   b) an aluminum component and
   c) another electron donor component,

   which comprises using as electron donor component within the titanium-containing solid component a) a norbornadienedicarboxylate of the formula I

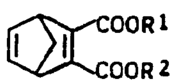

(I)

   where $R^1$ and $R^2$ are each $C_1$-$C_8$-alkyl.

2. A process as claimed in claim 1, which comprises using as electron donor component within the titanium-containing solid component (a) a norbornadienedicarboxylate of the formula I where $R^1$ and $R^2$ are each $C_1$-$C_4$-alkyl.

3. A process as claimed in claim 1 or 2, wherein the aluminum component (b) used is a trialkylaluminum whose alkyl substituents each have from 1 to 8 carbon atoms.

4. A process as claimed in any of claims 1 to 3, wherein the other electron donor component (c) used is a silicon compound of the formula II

$$R^3_nSi(OR^4)_{4-n} \qquad II$$

   where $R^3$ is one of the radicals $R^1$ or $C_6$-$C_{10}$-aryl or arylalkyl, $R^4$ is $C_1$-$C_{10}$-alkyl, and n is from 0 to 3.

5. A process as claimed in any of claims 1 to 4, wherein the other electron donor component (c) used is a silicon compound of the formula II where $R^4$ is $C_1$-$C_4$-alkyl.

6. A process as claimed in any of claims 1 to 5, which comprises applying the catalyst system obtainable thereby to $SiO_2 \cdot aAl_2O_3$ as support, where a is from 0 to 2.

7. A process for preparing a catalyst system as claimed in any of claims 1 to 6, which comprises
   a) in a first stage mixing a finely divided support with a solution of a magnesium compound in a liquid

alkane at from 10 to 120°C, then passing in a halogen or hydrogen halide in a not less than two-fold molar excess and, after about 30 to 120 minutes, mixing this solution at from 10 to 150°C with a $C_1$-$C_8$-alkanol, a halide or an alcoholate of trivalent or tetravalent titanium and the norbornadienedicarboxylate of the formula I, using from 1 to 5 mol of alkanol, from 2 to 20 gram atoms of trivalent or tetravalent titanium and from 0.01 to 1 mol of the norbornadienedicarboxylate per gram atom of magnesium in the magnesium compound, and subsequently filtering off the resulting solid,
c) then in a second stage extracting the solid obtained in the first stage with excess titanium tetrachloride, which may be in solution in an inert solvent, at from 100 to 150°C for some hours, and subsequently washing with a liquid alkane until the titanium tetrachloride content in the washing liquid is below 2 % by weight,

and subsequently combining the titanium component obtainable in this way with the aluminum component and the other electron donor component.

**8.** A process for preparing propylene polymers by polymerization at from 20 to 150°C under from 1 to 100 bar, wherein a catalyst system prepared as claimed in any of claims 1 to 7 is used.

## Revendications

### Revendications pour les Etats contractants suivants : AT, BE, DE, FR, GB, IT, NL

**1.** Systèmes catalytiques du type des catalyseurs de Ziegler-Natta, contenant, comme constituants actifs,
a) un composant solide titane qui contient du titane, du magnésium, un halogène et, en tant que donneur d'électrons, un ester de norbornadiène et d'acide dicarboxylique de formule générale I

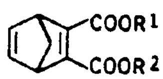

I

dans laquelle $R^1$ et $R^2$ representent des groupements alkyle en $C_1$-$C_8$,
b) un composant à base d'aluminium et
c) un autre composant donneur d'electrons.

**2.** Systèmes catalytiques selon la revendication 1, dans l'ester de norbornadiène et d'acide dicarboxylique desquels $R^1$ et $R^2$ représentent des groupements alkyle en $C_1$ à $C_4$.

**3.** Systèmes catalytiques selon la revendication 1 ou 2, dans lesquels est utilisé, comme composant à base d'aluminium, un trialkylaluminium dont les substituants alkyle comportent chacun 1 à 8 atomes de carbone.

**4.** Systèmes catalytiques selon l'une quelconque des revendications 1 à 3, dans lesquels est utilisé, comme autre composant donneur d'électrons (c), un composant à base de silicium de formule générale II

$$R^3_nSi(OR^4)_{4-n} \quad II$$

dans laquelle $R^3$ est mis pour l'un des restes $R^1$ ou pour un reste aryle en $C_6$-$C_{10}$ ou arylalkyle, $R^4$ représente un groupement alkyle en $C_1$-$C_{10}$ et n correspond à une valeur de 0 à 3.

**5.** Systèmes catalytiques selon l'une quelconque des revendications 1 à 4, dans lesquels est utilisé, comme autre composant donneur d'électrons (c), un composant à base de silicium de formule génerale II, dans laquelle $R^4$ représente un groupement alkyle en $C_1$-$C_4$.

**6.** Systèmes catalytiques selon l'une quelconque des revendications 1 à 5, fixés sur du $SiO_2.aAl_2O_3$ servant de matière de support, a étant mis pour une valeur dans la plage de 0 à 2.

**7.** Procédé de préparation des systèmes catalytiques selon l'une quelconque des revendications 1 à 6, caractérisé en ce que
a) dans une première étape, on additionne une matière de support finement divisée d'une solution d'un composé magnésien dans un alcane liquide, à une température comprise entre 10 et 120°C, puis on y envoie un halogène ou un hydracide halogéné en excès molaire au moins double et, au bout d'environ 30 à 120 mn, on additionne cette solution, à une température comprise entre 10 et 150°C, d'un alcanol

en $C_1$-$C_8$, d'un halogénure ou d'un alcoolate du titane tri- ou tétravalent, et de l'ester de norbornadiène et d'acide dicarboxylique de formule I, en utilisant, par mole de magnésium du composé magnésien, 1 à 5 moles d'alcanol, 2 à 20 moles du titane tri- ou tétravalent et 0,01 à 1 mole de l'ester de norbornadiène et d'acide dicarboxylique, et on sépare ensuite par filtration la substance solide ainsi obtenue,

c) puis, dans une seconde étape, on extrait la matière solide obtenue dans la première étape, pendant quelques heures à des températures comprises entre 100 et 150°C, avec du tétrachlorure de titane en excès ou avec une solution, présente en excès, de tétrachlorure de titane dans un solvant inerte, après quoi on lave avec un alcane liquide jusqu'à ce que la teneur du liquide de lavage en tétrachlorure de titane soit inférieure à 2% en poids,

puis on réunit le composant à base de titane obtenu de cette manière au composant à base d'aluminium et à l'autre composant donneur d'électrons.

**8.** Procédé de préparation de polymères du propylène par polymérisation à des températures de 20 à 150°C et sous des pressions de 1 à 100 bar, caractérisé en ce qu'on utilise à cette fin un système catalytique selon l'une quelconque des revendications 1 à 6.

**Revendications pour l'Etat contractant suivant : ES**

**1.** Procédé de préparation de systèmes catalytiques du type des catalyseurs de Ziegler-Natta, contenant, comme constituants actifs,

a) un composant solide titané qui contient du titane, du magnésium, un halogène et un composant donneur d'électrons,

b) un composant à base d'aluminium et

c) un autre composant donneur d'électrons,

caractérisé en ce qu'on utilise, comme composant donneur d'électrons dans le composant solide titané a), un ester de norbornadiène et d'acide dicarboxylique de formule générale I

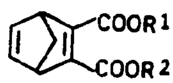

I

dans laquelle $R^1$ et $R^2$ représentent des groupements alkyle en $C_1$-$C_8$.

**2.** Procédé selon la revendication 1, caractérisé en ce qu'on utilise, comme composant donneur d'électrons dans le composant solide titané a), un ester de norbornadiène et d'acide dicarboxylique de formule générale I dans laquelle $R^1$ et $R^2$ représentent des groupements alkyle en $C_1$ à $C_4$.

**3.** Procédé selon la revendication 1 ou 2, caractérisé en ce qu'on utilise, comme composant à base d'aluminium, un trialkylaluminium dont les substituants alkyle comportent chacun 1 à 8 atomes de carbone.

**4.** Procédé selon l'une quelconque des revendications 1 à 3, caractérisé en ce qu'on utilise, comme autre composant donneur d'électrons (c), un composant à base de silicium de formule générale II

$$R^3_nSi\,(OR^4)_{4-n} \qquad II$$

dans laquelle $R^3$ est mis pour l'un des restes $R^1$ ou pour un reste aryle en $C_6$-$C_{10}$ ou arylalkyle, $R^4$ représente un groupement alkyle en $C_1$-$C_{10}$ et n correspond à une valeur de 0 à 3.

**5.** Procédé selon l'une quelconque des revendications 1 à 4, caractérisé en ce qu'on utilise, comme autre composant donneur d'électrons (c), un composant à base de silicium de formule générale II, dans laquelle $R^4$ représente un groupement alkyle en $C_1$-$C_4$.

**6.** Procédé selon l'une quelconque des revendications 1 à 5, caractérisé en ce qu'on fixe les systèmes catalytiques ainsi obtenus sur du $SiO_2.aAl_2O_3$ servant de matière de support, a étant mis pour une valeur dans la plage de 0 à 2.

**7.** Procédé de préparation des systèmes catalytiques selon l'une quelconque des revendications 1 à 6, caractérisé en ce que

a) dans une première étape, on additionne une matière de support finement divisée d'une solution d'un composé magnésien dans un alcane liquide, à une température comprise entre 10 et 120°C, puis on y envoie un halogène ou un hydracide halogéne en excès molaire au moins double et, au bout d'environ

30 à 120 mn, on additionne cette solution, à une température comprise entre 10 et 150°C, d'un alcanol en $C_1$-$C_8$, d'un halogénure ou d'un alcoolate du titane tri- ou tétravalent, et de l'ester de norbornadiène et d'acide dicarboxylique de formule I, en utilisant, par mole de magnésium du composé magnésien, 1 à 5 moles d'alcanol, 2 à 20 moles du titane tri- ou tétravalent et 0,01 à 1 mole de l'ester de norbornadiène et d'acide dicarboxylique, et on sépare ensuite par filtration la substance solide ainsi obtenue,
c) puis, dans une seconde étape, on extrait la matière solide obtenue dans la première étape, pendant quelques heures à des températures comprises entre 100 et 150°C, avec du tétrachlorure de titane en excès ou avec une solution, présente en excès, de tétrachlorure de titane dans un solvant inerte, après quoi on lave avec un alcane liquide jusqu'à ce que la teneur du liquide de lavage en tétrachlorure de titane soit inférieure à 2% en poids,

puis on réunit le composant à base de titane obtenu de cette manière au composant à base d'aluminium et à l'autre composant donneur d'électrons.

8. Procédé de préparation de polymères du propylène par polymérisation à des températures de 20 à 150°C et sous des pressions de 1 à 100 bar, caractérisé en ce qu'on utilise à cette fin un système catalytique préparé selon l'une quelconque des revendications 1 à 7.